(19) Europäisches Patentamt
European Patent Office
Office européen des brevets

(11) **EP 3 968 212 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **20195666.1**

(22) Anmeldetag: **11.09.2020**

(51) Internationale Patentklassifikation (IPC):
**G06F 18/2413** (2023.01) **G06V 10/44** (2022.01)
**G06V 20/10** (2022.01)

(52) Gemeinsame Patentklassifikation (CPC):
**G06V 20/176; G06F 18/24133; G06V 10/454**

(54) **COMPUTERIMPLEMENTIERTES VERFAHREN ZUM BEREITSTELLEN VON SCHALTZUSTANDSDATEN**

COMPUTER-IMPLEMENTED METHOD FOR PROVIDING SWITCH STATE DATA

PROCÉDÉ MISE EN ŒUVRE PAR ORDINATEUR PERMETTANT DE FOURNIR DES DONNÉES D'ÉTAT DE COMMUTATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.03.2022 Patentblatt 2022/11**

(73) Patentinhaber: **Siemens Aktiengesellschaft**
**80333 München (DE)**

(72) Erfinder:
• **Fröhner, Wiebke**
**92224 Amberg (DE)**
• **Werner, Thomas**
**91126 Rednitzhembach (DE)**

(74) Vertreter: **Siemens Patent Attorneys**
**Postfach 22 16 34**
**80506 München (DE)**

(56) Entgegenhaltungen:
• **MOU XINGANG ET AL: "State Recognition of Electric Control Cabinet Switches Based on CNNs", 2018 IEEE 3RD INTERNATIONAL CONFERENCE ON IMAGE, VISION AND COMPUTING (ICIVC), IEEE, 27. Juni 2018 (2018-06-27), Seiten 183-187, XP033422189, DOI: 10.1109/ICIVC.2018.8492853 [gefunden am 2018-10-15]**
• **FU CHEN-ZHAO ET AL: "Research on a Detection and Recognition Algorithm for High-Voltage Switch Cabinet Based on Deep Learning with an Improved YOLOv2 Network", 2018 11TH INTERNATIONAL CONFERENCE ON INTELLIGENT COMPUTATION TECHNOLOGY AND AUTOMATION (ICICTA), IEEE, 22. September 2018 (2018-09-22), Seiten 346-350, XP033431448, DOI: 10.1109/ICICTA.2018.00085 [gefunden am 2018-10-26]**

**Beschreibung**

Die Erfindung betrifft ein computerimplementiertes Verfahren zum Bereitstellen von Schaltzustandsdaten sowie eine Datenverarbeitungsvorrichtung zur Ausführung des Verfahrens. Gleichermaßen betrifft die Erfindung ein Computerprogrammprodukt, mit dem das Verfahren durchführbar ist, sowie ein computerlesbares Speichermedium, auf dem ein solches Computerprogrammprodukt gespeichert ist. Die Erfindung betrifft außerdem ein computerimplementiertes Verfahren zum Bereitstellen einer ersten trainierten Funktion zur Mustererkennung.

In Niederspannungsnetzen zur öffentlichen Stromversorgung, d.h. in Ortsnetzen, finden häufig Schaltmaßnahmen statt, weil in diesen Netzen bzw. in den von diesen Netzen versorgten Gebieten Bau- und Wartungsarbeiten durchgeführt werden. Diese Schaltmaßnahmen erfolgen im Allgemeinen durch das Ein- bzw. Ausstecken von Sicherungseinsätzen oder Kontakteinsätzen in einer Stromverteilungsvorrichtung einer Verteilerstation, z.B. einer Ortsnetzstation (= ONS), auch kurz als Trafostation bezeichnet, oder eines Kabelverteilerschranks (= KVS).

Viele Verteilnetzbetreiber lassen diese Schaltmaßnahmen nicht durch die eigenen Mitarbeiter, sondern durch Fremdfirmen durchführen, die im Auftrag des Verteilnetzbetreibers die Bau- und Wartungsarbeiten und dabei auch die Schaltmaßnahmen ausführen. Dabei kommt es immer wieder vor, dass die Schaltmaßnahmen nicht oder nicht ausreichend sorgfältig dokumentiert werden. In Folge geht der Verteilnetzbetreiber, in Unkenntnis des tatsächlichen Schaltzustands des betroffenen Netzes, bei der Netzplanung oder dem Netzbetrieb von falschen Annahmen aus. Als Konsequenz muss er für diese Aufgaben höhere Aufwände leisten, weil Schaltzustände überprüft und Arbeitsschritte wiederholt werden müssen.

Für dieses Problem gibt es bisher keine praktikable und kostengünstige Lösung. Eine zusätzliche Ausrüstung einer Stromverteilungsvorrichtung mit Kontakten oder Sensoren inklusive einer zugehörigen Datenübertragung zu einer Zentrale kommt aufgrund der hohen Installationsaufwände und der Kosten im Allgemeinen nicht in Betracht.

Mou, Xingang, et al.: "State Recognition of Electric Control Cabinet Switches Based on CNNs", 2018 IEEE 3rd International Conference on Image, Vision and Computing (ICIVC), IEEE, 27. Juni 2018 (2018-06-27), Seiten 183-187, beschreibt eine automatisierte Erkennung von Schalterzuständen anhand eines Fotos einer Stromverteilungsvorrichtung (Verteilerstation) sowie ein Anlernen einer Funktion zur Bilderkennung.

Fu, Chen-Zhao, et al.: "Research on a Detection and Recognition Algorithm for High-Voltage Switch Cabinet Based on Deep Learning with an improved YOLOv2 Network", 2018 11th International Conference on Intelligent Computation Technology and Automation (ICICTA), IEEE, 22. September 2018 (2018-09-22), Seiten 346-350, beschreibt eine automatisierte Erkennung von Schalterzuständen anhand eines Fotos einer Stromverteilungsvorrichtung (Hochspannungs-Schaltschrank).

Beide Publikationen bleiben bei dem Schritt der Bilderkennung und der Annotation der Zustände in den Bildern stehen. Sie beschreiben aber nicht, wie aus den Annotationsinformationen mit Hilfe von Analysen von technischen Zeichnungen, manuellen Eingaben und Schnittstellen zu anderen EDV-Systemen Funktionsausgabedaten und Kennzeichnungsdaten, welche Kennzeichnungen von Abgängen und/oder Phasen in der Stromverteilungsvorrichtung umfassen, so verknüpft werden können, dass die resultierenden Datenmodelle von anderen EDV-Systemen weiterverarbeitet werden können.

Der Erfindung liegt daher die Aufgabe zugrunde, den tatsächlichen Schaltzustand einer Stromverteilungsvorrichtung einer Verteilerstation zu erkennen und zu dokumentieren.

Die Aufgabe wird gelöst durch ein Verfahren gemäß Anspruch 1. Dieses Verfahren ist computerimplementiert, d.h. es wird ganz oder teilweise mit einem Computerprogramm, welches von einer Datenverarbeitungsvorrichtung, synonym als Recheneinheit bezeichnet, abgearbeitet wird, realisiert. Das Verfahren dient zum Bereitstellen von Schaltzustandsdaten, welche einen Schaltzustand einer Stromverteilungsvorrichtung, welche Abgänge für ein Niederspannungsnetz aufweist, beschreiben. Eine Stromverteilungsvorrichtung verteilt elektrische Energie, welche durch eine Einspeiseleitung zugeführt wird, auf einen oder mehrere Abgänge, d.h. Ausgangsleitungen zu unterschiedlichen Stromverbrauchern. Sowohl die Einspeiseleitung als auch jeder der Abgänge leiten in der Regel Mehrphasenstrom mithilfe von Stromkabeln mit mehreren Außenleitern, die auch als Phasenleiter oder kurz als Phasen bezeichnet werden. Meistens handelt es sich in Niederspannungsnetzen um ein Mehrphasen-Stromsystem mit der Phasenzahl $m = 3$, d.h. Dreiphasenwechselstrom wird mithilfe von Stromkabeln mit drei Au-βenleitern L1, L2, L3 geführt. Die Erfindung ist natürlich auch bei Stromsystemen mit anderen Phasenzahlen anwendbar.

Das Verfahren weist einen Schritt auf, in dem eine Bilddatei, in der ein mit einer Digitalkamera, welche als ein eigenständiges Gerät vorliegen oder in ein elektronisches Mobilgerät wie z.B. in ein Smartphone oder einen Tabletcomputer integriert sein kann, aufgenommenes Foto der Stromverteilungsvorrichtung einer Verteilerstation gespeichert ist, empfangen wird, durch ein erstes, zum Empfangen einer Bilddatei konfiguriertes Interface einer Datenverarbeitungsvorrichtung. Dabei sind auf dem Foto Schaltelemente abgebildet, deren Schaltzustand optisch erfassbar ist. Diese Schaltelemente sind einzelnen Phasen der Abgänge zugeordnet. So kann ein erstes Schaltelement einem ersten Außenleiter L1 eines ersten Abgangs, ein zweites Schaltelement einem zweiten Außenleiter L2 des ersten Abgangs, und ein drittes Schaltelement einem dritten Außenleiter L3 des ersten Abgangs zugeordnet sein. Die Schaltelemente sind in der Regel in sogenannten Sicherungsleisten angeordnet, wobei eine Sicherungsleiste die einem Abgang zugeordneten Schaltelemente umfasst. Im Rahmen dieser Beschreibung umfasst der Begriff Sicherungsleisten auch Lastschaltleisten, welche ähnlich wie Sicherungsleisten aufgebaut sind, aber zusätzlich über einen Hebelmechanismus verfügen, mit dem die Sicherungs- und Kontakteinsätze ein- bzw. ausgesteckt werden können; somit ist das Erscheinungsbild von Sicherungsleisten und Lastschaltleisten unterschiedlich. Es ist möglich, dass das Foto der Stromverteilungsvorrichtung von einem Mitarbeiter des Verteilnetzbetreibers oder einer vom Verteilnetzbetreiber beauftragten Firma mithilfe einer Digitalkamera nach einem Durchführen einer Schaltmaßnahme an der Stromverteilungsvorrichtung aufgenommen wird. Die Bilddatei kann dabei das eigentliche Foto, in der Regel als eine Rastergrafik, z.B. gespeichert in einem üblichen Bilddateiformat wie jpg, png oder tif, sowie Informationen zum Foto, also Bildmetadaten, z.B. gespeichert in einem Format wie exif, beinhalten.

Eine Verteilerstation kann ein Kabelverteilerschrank oder eine Ortsnetzstation sein. Ein Schaltelement kann ein einen Außenleiter L1, L2, L3 unterbrechendes Kontaktpaar aufweisen, welches durch Einsetzen eines Sicherungseinsatzes, z.B. in Form einer NH-Sicherung, auch als Messersicherung oder Schwertsicherung bezeichnet, oder eines Kontakteinsatzes elektrisch leitend geschaltet werden kann. Ein Schaltelement kann alternativ ein in den Strompfad eines Außenleiters L1, L2, L3 eingesetzter Leistungsschalter sein.

Das Verfahren weist einen weiteren Schritt auf, in dem mithilfe einer Recheneinheit eine erste trainierte Funktion zur Mustererkennung auf die Bilddatei angewendet wird. Die Begriffe Mustererkennung, Bilderkennung und Bildanalyse werden hier synonym verwendet. Durch die Anwendung der ersten trainierten Funktion zur Mustererkennung auf die Bilddatei werden Funktionsausgabedaten erzeugt, welche Informationen zum Schaltzustand der Schaltelemente beinhalten. Die erste trainierte Funktion zur Mustererkennung ist in der Lage, aus der Bilddatei Informationen hinsichtlich der in der Stromverteilungsvorrichtung verwendeten Schaltelemente und hinsichtlich des Schaltzustandes dieser Schaltelemente zu entnehmen. Die durch die Anwendung der ersten trainierten Funktion zur Mustererkennung auf die Bilddatei erzeugten Funktionsausgabedaten umfassen diese Informationen.

Das Verfahren weist einen weiteren Schritt auf, in dem die Schaltzustandsdaten, welche die Funktionsausgabedaten umfassen, bereitgestellt werden, durch ein zweites, zum Bereitstellen von Schaltzustandsdaten konfiguriertes Interface einer Datenverarbeitungsvorrichtung. Die Schaltzustandsdaten können dem Verteilnetzbetreiber bereitgestellt werden, z.B. zur Kontrolle und/oder zur Speicherung in einer Datenbank. Die Schaltzustandsdaten können zusätzlich zu den Funktionsausgabedaten noch weitere Daten aufweisen, wie Identifizierungsdaten, z.B. Bezeichnungen oder geographische Positionsdaten, oder Metadaten, insbesondere den Funktionsausgabedaten zugeordnete Metadaten, wie z.B. Uhrzeit und Tag der Aufnahme des digitalen Fotos.

Eine Kernidee des Verfahrens ist, aus einem digitalen Foto von üblicherweise in Sicherungsleisten angeordneten Schaltelementen einer Stromverteilungsvorrichtung, die in einer Verteilerstation angeordnet ist, mit Hilfe von Bilderkennungssoftware den Schaltzustand der Stromverteilungsvorrichtung auf automatisierte Weise optisch zu erkennen und in einem digitalisierten Modell des Niederspannungsnetzes zu speichern.

Die erste trainierte Funktion ist eine Funktion, die durch einen ML-Algorithmus trainiert wird (ML = Maschinelles Lernen; engl.: Machine Learning). Unter einem Training sei allgemein eine Optimierung einer Abbildung von Eingangsparametern eines parametrisierten Systemmodells, z.B. eines neuronalen Netzes, auf einen oder mehrere Zielparameter verstanden. Diese Abbildung wird nach vorgegebenen, gelernten und/oder zu lernenden Kriterien während einer Trainingsphase optimiert. Als Kriterien können z.B. bei Mustererkennungsmodellen ein Prozentsatz von erfolgreich erkannten Mustern herangezogen werden. Eine Trainingsstruktur kann z.B. eine Vernetzungsstruktur von Neuronen eines neuronalen Netzes und/oder Gewichte von Verbindungen zwischen den Neuronen umfassen, die durch das Training so ausgebildet werden, dass die Kriterien möglichst gut erfüllt werden.

Im vorliegenden Ausführungsbeispiel wird ein neuronales Netz, abgekürzt als NN bezeichnet, anhand von vorgegebenen Fotografien von Schaltelementen in verschiedenen Schaltzuständen darauf trainiert, ein Schaltelement auf einem Foto sowie dessen Schaltzustand zu erkennen. Um bestimmte Objekte bzw. Muster von anderen Objekten unterscheiden zu können, müssen Eigenschaften des Objektes wie Form, Größe, und Farbe des zu erkennenden Objekts beschrieben und mathematisch abgebildet werden. Je genauer die Beschreibung des Objektes bzw. Musters möglich ist und je mehr auswertbare Informationen vorhanden sind, umso zuverlässiger arbeitet die Objekt- oder Mustererkennung.

Die erste trainierte Funktion ist Teil einer Mustererkennungs- und Bildanalyseeinrichtung. Zur Konfiguration verfügt die Mustererkennungs- und Bildanalyseeinrichtung über ein oder mehrere trainierbare Funktionen, d.h. in Rechenmodulen der Mustererkennungs- und Bildanalyseeinrichtung durchführbare Algorithmen, die Verfahren des maschinellen Lernens implementieren, um durch Training die Mustererkennung bzw. die Bildanalyse zu optimieren. Diese trainierbaren Funktionen können mit bekannten Standardverfahren des maschinellen Lernens darauf trainiert werden, in Eingabe-Bilddateien vorgegebene Muster möglichst genau wiederzuerkennen. Zu diesem Zweck kann z.B. ein jeweiliges von der Funktion in Eingabe-Bilddateien erkanntes Muster mit einem in den Eingabe-Bilddateien tatsächlich vorhandenen Muster verglichen werden und die Funktion darauf trainiert werden, eine Abweichung zu minimieren. Ein solches Lernverfahren wird häufig auch als überwachtes Lernen bezeichnet.

In der Regel ist ein Training umso erfolgreicher, je mehr Trainingsdaten, d.h. zum Training verwendbare Bilddateien verfügbar sind. Insbesondere sollten die Trainingsdaten einen möglichst großen Bereich von möglichen Konstellationen einer Verteilerstation repräsentativ abdecken.

Wie oben bereits erwähnt, wird gemäß der vorliegenden Erfindung durch das Training des neuronalen Netzes NN angestrebt, dass dieses auf einem Foto die Art eines abgebildeten Schaltelements sowie dessen Schaltzustand anhand von vorgegebenen Fotografien von Schaltelementen in verschiedenen Schaltzuständen möglichst genau wiedererkennt. Zu diesem Zweck werden die vom neuronalen Netz NN ausgegebenen Funktionsausgabedaten mit dem tatsächlich auf dem Foto abgebildeten Schaltzustand verglichen. Im Rahmen des Vergleichs wird eine Abweichung bzw. Differenz D zwischen den Funktionsausgabedaten und dem korrespondierenden, tatsächlich vorliegenden Schaltzustand gebildet. Die Differenz D repräsentiert einen Erkennungsfehler des neuronalen Netzes NN. Die Differenz D wird zum neuronalen Netz NN zurückgeführt, das darauf trainiert wird, die Differenz D zu minimieren, d.h. die Art eines abgebildeten Schaltelements sowie dessen Schaltzustand möglichst genau zu erkennen.

Zum Training des neuronalen Netzes NN kann eine Vielzahl von Standard-Trainingsverfahren für neuronale Netze, insbesondere des überwachten Lernens, eingesetzt werden. Die zu minimierende Abweichung D kann dabei durch eine geeignete Kostenfunktion repräsentiert werden. Zur Minimierung der Abweichung D kann insbesondere eine Gradienten-Abstiegsmethode verwendet werden. Im Allgemeinen imitiert eine trainierte Funktion kognitive Fähigkeiten, welche Menschen mit dem Verstand anderer Menschen assoziieren. Insbesondere ist eine trainierte Funktion durch das Training auf Basis von Trainingsdaten in der Lage, sich an neue Umstände anzupassen und Muster zu entdecken und zu extrapolieren.

Im Allgemeinen können Parameter einer trainierten Funktion durch Training, d.h. Lernen, angepasst werden. Insbesondere kann dazu überwachtes Lernen, teilüberwachtes Lernen, unüberwachtes Lernen, bestärkendes Lernen und/oder aktives Lernen benutzt werden. Außerdem kann Repräsentations-Lernen, auch "Feature Learning" genannt, verwendet werden. Insbesondere können die Parameter der trainierten Funktionen iterative durch mehrere Trainingsschritte angepasst werden.

Insbesondere kann eine trainierte Funktion ein neuronales Netzwerk, eine Support Vector Machine, einen Entscheidungsbaum und/oder ein Bayessches Netz aufweisen, und/oder die trainierte Funktion kann auf k-means clustering, Qlearning, Genetischen Algorithmen und/oder Assoziierungsregeln basieren. Insbesondere kann ein neuronales Netzwerk ein Tiefes Neuronales Netzwerk (engl.: Deep Neural Network), ein Faltendes Neuronales Netzwerk (engl.: convolutional neural network) oder ein Tiefes Faltendes Neuronales Netzwerk (engl.: convolutional deep neural network) sein. Ferner kann ein neuronales Netzwerk ein Adversarial Network, ein Deep Adversarial Network und/oder ein Generative Adversarial Network sein.

Im Folgenden wird die Erfindung beschrieben mit Bezug auf die beanspruchten Verfahren sowie mit Bezug auf die beanspruchte Datenverarbeitungsvorrichtung. Dabei genannte Merkmale, Vorteile und alternative Ausgestaltungen können auch den anderen beanspruchten Gegenständen zugeordnet werden und umgekehrt. Mit anderen Worten: Ansprüche auf die Verfahren können mit Merkmalen, die im Kontext der Datenverarbeitungsvorrichtung beschrieben oder beansprucht werden, verbessert werden, und umgekehrt. In diesem Fall sind funktionelle Merkmale des Verfahrens durch gegenständliche Einheiten der Datenverarbeitungsvorrichtung verkörpert.

Außerdem wird die Lösung gemäß der Erfindung im Folgenden sowohl in Bezug auf ein Verfahren und eine Datenverarbeitungsvorrichtung zum Bereitstellen von Schaltzustandsdaten als auch in Bezug auf ein Verfahren zum Bereitstellen einer ersten trainierten Funktion zur Mustererkennung beschrieben. Dabei genannte Merkmale, Vorteile und alternative Ausgestaltungen können auch den anderen beanspruchten Gegenständen zugeordnet werden und umgekehrt. Mit anderen Worten: Ansprüche auf das Verfahren und die Datenverarbeitungsvorrichtung zum Bereitstellen von Schaltzustandsdaten können mit Merkmalen, die im Kontext des Verfahrens zum Bereitstellen einer ersten trainierten Funktion zur Mustererkennung beschrieben oder beansprucht werden, verbessert werden, und umgekehrt.

Insbesondere kann die erste trainierte Funktion zur Mustererkennung des Verfahrens und der Datenverarbeitungsvorrichtung zum Bereitstellen von Schaltzustandsdaten durch das Verfahren zum Bereitstellen einer ersten trainierten Funktion zur Mustererkennung angepasst werden. Außerdem kann die Bilddatei vorteilhafte Merkmale und Ausgestaltungen der Trainings-Eingabedaten aufweisen, und umgekehrt. Ferner können die Funktionsausgabedaten vorteilhafte Merkmale und Ausgestaltungen der Trainings-Ausgabedaten aufweisen, und umgekehrt.

Die Aufgabe wird außerdem gelöst durch eine Datenverarbeitungsvorrichtung gemäß Anspruch 7. Die Datenverarbeitungsvorrichtung dient zur Ausführung des Verfahrens nach Anspruch 1. Die Datenverarbeitungsvorrichtung umfasst ein erstes Interface, welches zum Empfangen der Bilddatei und von Kennzeichnungsdaten konfiguriert ist. Die Datenverarbeitungsvorrichtung umfasst ein zweites Interface, welches zum Bereitstellen der Schaltzustandsdaten, umfassend die verknüpften Funktionsausgabedaten und Kennzeichnungsdaten, konfiguriert ist. Und die Datenverarbeitungsvorrichtung umfasst eine Recheneinheit, welche zum Anwenden der ersten trainierten Funktion zur Mustererkennung auf die Bilddatei konfiguriert ist, wodurch die Funktionsausgabedaten erzeugt werden, welche Informationen zum Schaltzustand der Schaltelemente beinhalten, und zum Verknüpfen der Kennzeichnungsdaten mit den Funktionsausgabedaten.

Die Aufgabe wird außerdem gelöst durch ein Computerprogrammprodukt gemäß Anspruch 9. Das Computerprogrammprodukt umfasst Befehle, die bei der Ausführung des Computerprogrammprodukts durch einen Computer diesen veranlassen, das Verfahren nach einem der Ansprüche 1 bis 6 auszuführen. Es handelt sich um ein Computerprogrammprodukt zum Bereitstellen von Schaltzustandsdaten. Das Computerprogrammprodukt ist in einem Prozessor der Datenverarbeitungsvorrichtung ausführbar ausgebildet. Das Computerprogrammprodukt kann als Software, z.B. als eine herunterladbare Applikations-Software (kurz: App), oder als Firmware in einem Speicher der Datenverarbeitungsvorrichtung speicherbar und durch den Prozessor oder ein Rechenwerk der Datenverarbeitungsvorrichtung ausführbar ausgebildet sein. Alternativ oder ergänzend können ein oder mehrere Funktionen des Computerprogrammprodukts in Hardware ausgebildet sein, beispielsweise als ein ASIC oder in Form einer programmierbaren Logikschaltung, z.B. eines FPGA (ASIC = Application-Specific Integrated Circuit; FPGA = Field Programmable Gate Array). Das erfindungsgemäße Computerprogrammprodukt ist dazu ausgebildet, das Verfahren zum Bereitstellen von Schaltzustandsdaten nach einem der oben erwähnten Ansprüche durchzuführen. Das Computerprogrammprodukt ist also dazu ausgebildet, das Verfahren zum Bereitstellen von Schaltzustandsdaten, welche einen Schaltzustand einer Stromverteilungsvorrichtung mit Abgängen für ein Niederspannungsnetz beschreiben, durchzuführen. Insbesondere ist es dazu ausgebildet, den Schritt Empfangen einer Bilddatei, in der ein mit einer Digitalkamera aufgenommenes Foto der Stromverteilungsvorrichtung gespeichert ist, wobei auf dem Foto einzelnen Phasen der Abgänge zugeordnete Schaltelemente, deren Schaltzustand optisch erfassbar sind, abgebildet sind, durchzuführen. Das Empfangen umfasst dabei den Schritt, ein Speichern der Bilddatei in einem Speicher der Datenverarbeitungsvorrichtung zu veranlassen. Außerdem ist es dazu ausgebildet, den Schritt Anwenden, mit einer Recheneinheit, einer ersten trainierten Funktion zur Mustererkennung auf die Bilddatei, wodurch Funktionsausgabedaten erzeugt werden, welche Informationen zum Schaltzustand der Schaltelemente beinhalten, auszuführen. Außerdem ist es dazu ausgebildet, den Schritt Bereitstellen der Schaltzustandsdaten, umfassend die Funktionsausgabedaten auszuführen. Erfindungsgemäß ist das Computerprogrammprodukt dazu ausgebildet, mindestens eine Ausführungsform des skizzierten Verfahrens zum Bereitstellen von Schaltzustandsdaten umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. So kann das Computerprogrammprodukt teilweise in einem Prozessor der Datenverarbeitungsvorrichtung und teilweise in einem externen Prozessor, z.B. einem Prozessor eines Kommunikationsmoduls, ausführbar ausgebildet sein. Außerdem kann ein Teil des Verfahrens in der Datenverarbeitungsvorrichtung und/oder dem Kommunikationsmodul durchgeführt werden und ein anderer Teil des Verfahrens in einer der Datenverarbeitungsvorrichtung und/oder dem Kommunikationsmodul übergeordneten Steuereinheit, wie beispielsweise einer Computer-Cloud.

Die Aufgabe wird außerdem gelöst durch ein Computerlesbares Speichermedium mit einem Computerprogrammprodukt nach Anspruch 9. Übliche Speichermedien umfassen Festplatten, Magnetbänder und USB-Speicher und optische Medien wie CD-ROM oder DVD-Speicher (CD = Compact Disc; ROM = Read-Only Memory; DVD = Digital Versatile Disk).

Die Aufgabe wird außerdem gelöst durch ein Computerimplementiertes Verfahren gemäß Anspruch 11. Das Computerimplementierte Verfahren dient zum Bereitstellen einer ersten trainierten Funktion zur Mustererkennung gemäß Anspruch 1. Das Computerimplementierte Verfahren umfasst ein Empfangen von Trainings-Eingabedaten, umfassend mindestens eine Bilddatei, in der ein mit einer Digitalkamera aufgenommenes Foto einer Stromverteilungsvorrichtung gespeichert ist, wobei auf dem Foto einzelnen Phasen der Abgänge zugeordnete Schaltelemente, deren Schaltzustand optisch erfassbar sind, abgebildet sind.

Das Computerimplementierte Verfahren umfasst ein Empfangen von Trainings-Ausgabedaten, die zu den Trainings-Eingabedaten in Beziehung stehen und Informationen zum Schaltzustand der Schaltelemente beinhalten. Das Computerimplementierte Verfahren umfasst ein Trainieren einer ersten Funktion zur Mustererkennung, basierend auf den Trainings-Eingabedaten und den Trainings-Ausgabedaten. Und das Computerimplementierte Verfahren umfasst ein Bereitstellen der ersten trainierten Funktion zur Mustererkennung.

Die Erfindung bietet die folgenden Vorteile:
Zur Erkennung der Schaltzustände in den Niederspannungsnetzen braucht eine Stromverteilungsvorrichtung in einer Verteilerstation, z.B. in einer ONS oder einem KVS, nicht mit Kontakten oder Sensoren inklusive einer zugehörigen Datenübertragung und Kommunikationsverbindung zwischen der Verteilerstation und einem zentralen IT-System ausgerüstet werden (IT = Information Technology). Somit kann die Erfindung in Bestandsanlagen sofort genutzt werden, und es ergeben sich für den Netzbetreiber minimale Anfangsaufwände für die Nutzung der Erfindung.

Für das technische Personal vor Ort, d.h. an der Stromverteilungsvorrichtung, ergibt sich aus dem vorgeschlagenen Verfahren kein nennenswerter zusätzlicher Aufwand für die Abbildung der Schaltzustände. Bei bereits erfassten Anlagen muss lediglich ein digitales Foto erstellt werden, bei neuen Anlagen müssen gegebenenfalls außerdem Bezeichnungen von Abgängen, Phasen, usw. eingegeben werden.

Das aufgenommene und gespeicherte digitale Foto dient nicht nur zur automatischen Bestimmung des Schaltzustandes der Stromverteilungsvorrichtung, sondern auch zur Dokumentation der tatsächlichen Installation. In Zweifelsfälle ist es für den Anwender / Netzbetreiber sehr einfach möglich, das abstrahierte Datenmodell mit den tatsächlichen Gegebenheiten vor Ort zu vergleichen.

Das vorgeschlagene Verfahren arbeitet rein datengetrieben, d.h. es benötigt weder eine zusätzliche Installation in den Verteilerstationen noch eine manuelle Parametrierung eines Datenmodells. Daher lässt sich das Verfahren gut skalieren und für Software-as-a-Service-Modelle nutzen.

Eine Integration in ein IT-System eines Netzbetreibers ist nicht notwendig, die Erfindung lässt sich auch als Standalone-System sehr gut nutzen. Falls gewünscht, z.B. in späteren Ausbaustufen, ist eine Integration in ein IT-System eines Netzbetreibers selbstverständlich möglich.

Die Netzbetreiber müssen zunächst keine eigenen Daten bereitstellen. Dies ist ein erheblicher Vorteil bei der Vermarktung und Nutzung der Erfindung.

Das erfindungsgemäße Verfahren kann für alle Schaltelemente angewendet werden, bei denen der Schaltzustand optisch erfasst werden kann. Damit kann das System auch in elektrischen Netzen bzw. in Staaten eingesetzt werden, die für die Niederspannungsnetze andere Komponenten als Sicherungen und Kontaktstücke einsetzen, z.B. Leistungsschalter.

Vorteilhafte Ausgestaltungen und Weiterbildungen der Erfindung sind in den abhängigen Ansprüchen angegeben.

Gemäß einer bevorzugten Weiterbildung der Erfindung umfassen die Informationen zum Schaltzustand der Schaltelemente Informationen zur Art und/oder zur Schaltstellung mindestens eines Schaltelements. Arten eines Schaltelements sind z.B. folgende: Sicherungseinsatz, Kontakteinsatz, Leistungsschalter, NH-Sicherung. Der Schaltzustand eines Schaltelements kann offen (elektrisch nicht leitende) oder geschlossen (elektrisch leitend) sein.

Gemäß einer bevorzugten Weiterbildung der Erfindung umfassen die Informationen zum Schaltzustand der Schaltelemente Informationen zur Anzahl der Abgänge, in der Regel gleichbedeutend mit der Anzahl an Sicherungsleisten, und/oder zur Anzahl der Phasen je Abgang in der Stromverteilungsvorrichtung.

Gemäß einer bevorzugten Weiterbildung der Erfindung bildet das digitale Foto Sicherungsleisten und/oder Lastschaltleisten einer Stromverteilungsvorrichtung ab.

Gemäß einer bevorzugten Weiterbildung der Erfindung umfasst das Verfahren folgende Schritte: Empfangen von Identifizierungsdaten, welche eine Identifikation der Stromverteilungsvorrichtung erlauben; Verknüpfen der Identifizierungsdaten mit den Funktionsausgabedaten; Bereitstellen der Schaltzustandsdaten, umfassend die verknüpften Funktionsausgabedaten und Identifizierungsdaten. Identifizierungsdaten können geographische Positionsdaten oder eine Bezeichnung sein.

Gemäß der Erfindung umfasst das Verfahren folgende Schritte: Empfangen von Kennzeichnungsdaten, welche Kennzeichnungen der Abgänge und/oder Kennzeichnungen der Phasen in der Stromverteilungsvorrichtung umfassen; Verknüpfen der Kennzeichnungsdaten mit den Funktionsausgabedaten; Bereitstellen der Schaltzustandsdaten, umfassend die verknüpften Funktionsausgabedaten und Kennzeichnungsdaten.

Gemäß einer bevorzugten Weiterbildung der Erfindung werden die Identifizierungsdaten auf mindestens eine der folgenden Weisen gewonnen: a) mit Hilfe einer zweiten trainierten Funktion zur Mustererkennung aus technischen Dokumentationen; b) mit Hilfe einer IT-Schnittstelle zu einem anderen System, in dem die Identifizierungsdaten vorliegen; c) mit Hilfe einer Bedienoberfläche, mit deren Hilfe ein Anwender die Identifizierungsdaten einträgt. Die Benennung des Schaltmodells erfolgt also mit optischer Mustererkennung, z.B. aus einem in der Verteilerstation befindlichen Plan, Datenschnittstelle zu einem Datenspeicher oder manueller Eingabe.

Gemäß der Erfindung werden die Kennzeichnungsdaten auf mindestens eine der folgenden Weisen gewonnen: a) mit Hilfe einer zweiten trainierten Funktion zur Mustererkennung aus technischen Dokumentationen; b) mit Hilfe einer IT-Schnittstelle zu einem anderen System, in dem die Kennzeichnungsdaten vorliegen; c) mit Hilfe einer Bedienoberfläche, mit deren Hilfe ein Anwender die Kennzeichnungsdaten einträgt. Die Benennung des Schaltmodells erfolgt also mit optischer Mustererkennung, z.B. aus einem in der Verteilerstation befindlichen Plan, Datenschnittstelle zu einem Datenspeicher oder manueller Eingabe.

Gemäß einer bevorzugten Weiterbildung der Erfindung umfasst die Datenverarbeitungsvorrichtung a) eine Datenbank zum Speichern der Bilddateien, b) eine Datenbank zum Speichern folgender Datensätze: Kennzeichnung der Stromverteilungsvorrichtung; Geographische Position der Stromverteilungsvorrichtung; Anzahl der Abgänge; Bezeichnung der jeweiligen Abgänge, c) eine Datenbank zum Speichern abstrahierter Bildmodelle umfassend folgender Datensätze: Bezeichnung der Stromverteilungsvorrichtung; Grafik eines abstrahierten Bildmodells der Bilddatei; Bezeichnung A(a) des Abgangs an einer Position a; Bezeichnung der Phase P(p) an einer Position p, und d) eine Datenbank zum Speichern dynamischer Daten umfassend: Bezeichnung der Stromverteilungsvorrichtung; Art B(a,p) des Schaltelements der Phase p des Abgangs a; Schaltzustand S(a,p) des Schaltelements der Phase p des Abgangs a. Alternativ können die Informationen, die in den vier Datenbanken a) bis d) gespeichert werden, auch in ein bis drei Datenbanken oder in mehr als vier Datenbanken abgespeichert werden.

Die oben beschriebenen Eigenschaften, Merkmale und Vorteile dieser Erfindung sowie die Art und Weise, wie diese erreicht werden, werden klarer und deutlicher verständlich durch die folgende Beschreibung der Zeichnungen.

Hierbei zeigen in schematischer und nicht maßstabsgetreuer Darstellung:

FIG 1    eine Stromverteilungsvorrichtung im Inneren eines Kabelverteilerschranks;
FIG 2    ein digitales Foto des Innenraums eines Kabelverteilerschranks;
FIG 3    Verfahrensschritte gemäß einem Ausführungsbeispiel der vorliegenden Erfindung;
FIG 4    eine Datenverarbeitungsvorrichtung gemäß einem Ausführungsbeispiel der vorliegenden Erfindung;
FIG 5    eine Übersicht über Optionen, wie Datenzuordnungen des Schaltmodells erfolgen können;
FIG 6    eine Ausgestaltung eines künstlichen neuronalen Netzwerks; und
FIG 7    ein Ablaufdiagramm eines Computerprogramms gemäß einem Ausführungsbeispiel der vorliegenden Erfindung.

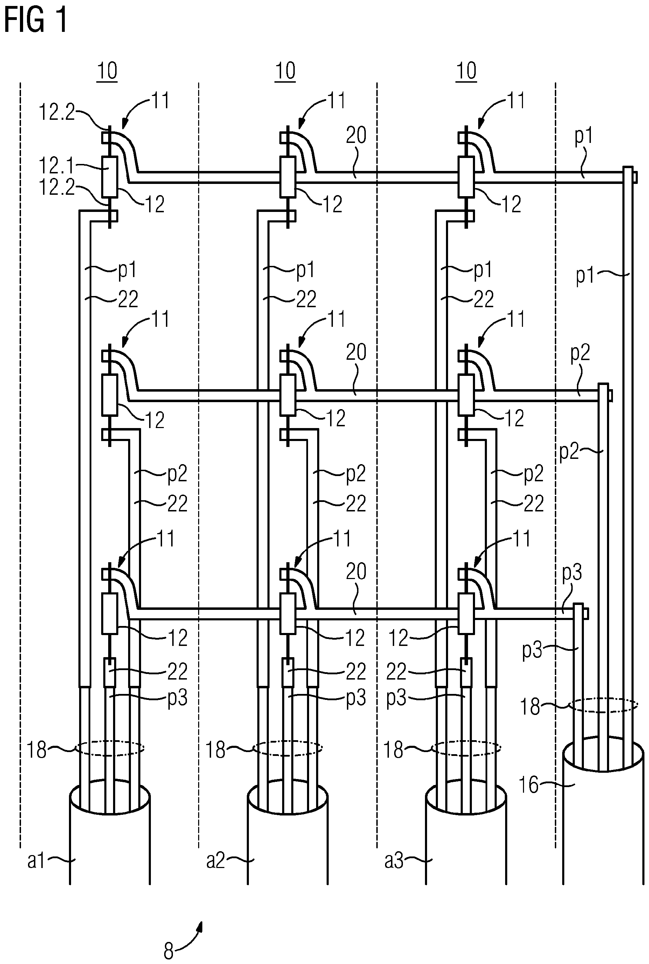

FIG 1 zeigt eine im Inneren einer Verteilerstation, z.B. einem Kabelverteilerschrank oder einer Ortsnetzstation, angeordnete Stromverteilungsvorrichtung 8, mit einer Einspeiseleitung 16 und drei Abgängen a1, a2, a3 zu je drei Phasen p1, p2, p3, wobei jeder der Abgänge a1, a2, a3 als eine Sicherungsleiste 10 ausgebildet ist. Dabei weisen die Sicherungsleisten 10 je Phase p1, p2, p3 ein mit einem Sicherungseinsatz 12 bestücktes Schaltelement 11 auf. Derartige Stromverteilungsvorrichtungen 8 werden insbesondere zur Niederspannungshauptverteilung (= NSHV) eingesetzt.
Die Sicherungseinsätze 12 sind als NH-Sicherungseinsätze 12 ausgebildet, welche Schmelzsicherungen sind und ein isolierendes Gehäuse 12.1 aufweisen, an dem zwei Kontakte 12.2 angebracht sind, die durch einen im Inneren des Gehäuses 12.1 angeordneten Schmelzleiter verbunden sind (NH-Sicherung = Niederspannungs-Hochleistungs-Sicherung). Der Schmelzleiter ist von einem Luftraum umgeben, oder er ist in Quarzsand eingebettet, der als Löschmittel eines Lichtbogens dient. Der Schmelzleiter wird durch den durchfließenden Strom erwärmt und schmilzt, sobald der Bemessungsstrom (Nennstrom) des NH-Sicherungseinsatzes 12 über einen bestimmten Zeitraum deutlich überschritten wird. Diese Schutzfunktion wird häufig als das "Auslösen der Sicherung" bezeichnet. Ausgelöste NH-Sicherungseinsätze sind unbrauchbar und müssen ersetzt werden.
Die Phasenleiter 18 einer Einspeiseleitung 16, welche jeweils einen der drei Phasenströme p1, p2, p3 leiten, sind jeweils mit einer Verteilerschiene 20 der Stromverteilungsvorrichtung elektrisch verbunden. Die der ersten Phase p1 zugeordnete Verteilerschiene 20 verteilt den Phasenstrom p1 der Einspeiseleitung 16 auf die drei der ersten Phase p1 zugeordneten Phasenleiter 18 der drei Abgänge a1, a2, a3. Analog werden die zwei weiteren Phasenströme p2, p3 der Einspeiseleitung 16 über zwei weitere Verteilerschienen 20 verteilt. Somit greift in jeder der Sicherungsleisten 10 ein Abgang a die Spannungen der drei Phasenleiter 18 der Zuleitung 16 ab.
Die elektrische Verbindung von einer Verteilerschiene 20 zu einem Phasenleiter 18 eines Abgangs a erfolgt jeweils über einen Sicherungseinsatz 12 und eine Polschiene 22. Ein erster Kontakt 12.2 des Sicherungseinsatzes 12 ist in eine Kontaktaufnahme der Verteilerschiene 20, ein zweiter Kontakt 12.2 des Sicherungseinsatzes 12 in eine Kontaktaufnahme der Polschiene 22 eingesteckt. Wird der Sicherungseinsatz 12 durch einen Kontakteinsatz 14 ersetzt, so wird eine sicherungslose elektrische Verbindung zwischen der entsprechenden Phase p1, p2 p3 der Einspeiseleitung 16 und des Abgangs a hergestellt. Wird der einer Phase p1, p2, p3 einer Sicherungsleiste 10 zugeordnete Sicherungseinsatz 12 bzw. Kontakteinsatz 14 aus den Kontaktaufnahmen entfernt, so führt dies zu einer Unterbrechung, d.h. einer Sperrung, des Strompfads der entsprechenden Phase von der Einspeiseleitung 16 zu dem Abgang a.
Durch Einsetzen bzw. Entfernen von Sicherungseinsätzen 12 oder Kontakteinsätzen 14 in die Strompfade bzw. aus den Strompfaden der jeweiligen Phasen p1, p2, p3 der Sicherungsleisten 10 kann die Verteilung der über die Einspeiseleitung 16 zur Verfügung stehenden elektrischen Energie auf die verschiedenen Abgänge a1, a2, a3 kontrolliert werden und können maximal zulässige Stromstärken in den einzelnen Phasen p1, p2, p3 definiert werden.

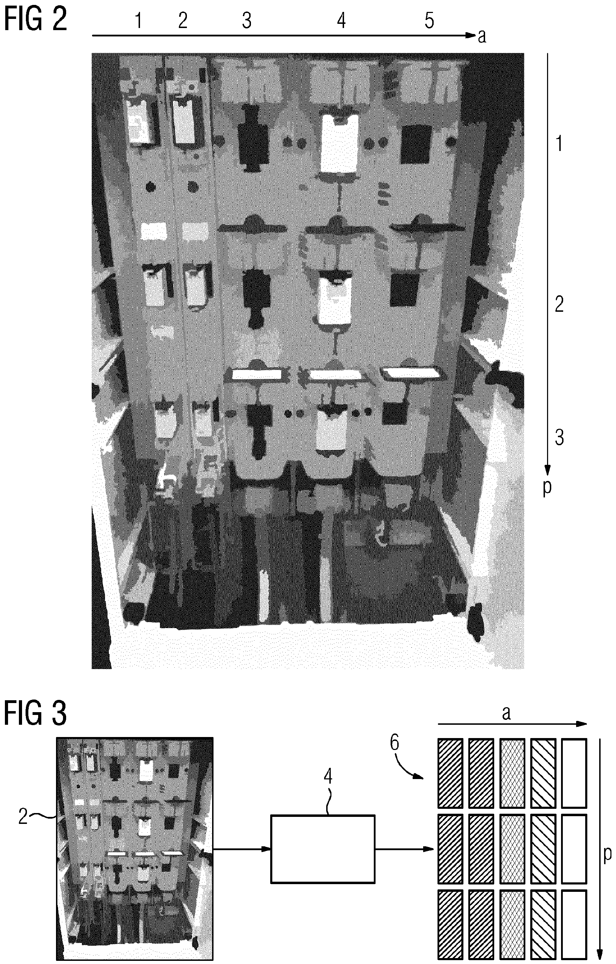

FIG 2 zeigt ein digitales Foto einer Stromverteilungsvorrichtung in einem Innenraum eines Kabelverteilerschranks, welche fünf Abgänge a, nummeriert von a1 bis a5, zu je drei Phasen p, nummeriert von p1 bis p3, aufweist. Dabei sind die drei Phasen p1, p2, p3 der beiden linken Abgänge a1, a2 jeweils mit einem ersten Sicherungseinsatz leitend, die drei Phasen p1, p2, p3 des mittleren Abgangs a3 jeweils mit einem Kontakteinsatz leitend, die drei Phasen p1, p2, p3 des vierten Abgangs a4 von links jeweils mit einem zweiten Sicherungseinsatz, der eine höhere Stromstärke als der erste Sicherungseinsatz zulässt, leitend und die drei Phasen p1, p2, p3 des fünften Abgangs a5 von links durch unbestückte Kontaktaufnahmen jeweils sperrend geschaltet.
FIG 3 zeigt Verfahrensschritte gemäß einem Ausführungsbeispiel der vorliegenden Erfindung. Dabei wird eine das digitale Foto von FIG 2 enthaltende Bilddatei 2 als Eingabedaten in eine erste trainierte Funktion zur Mustererkennung 4 verwendet. Die Funktion 4 erzeugt aus der Bilddatei 2 Funktionsausgabedaten 6, die die Beschaltung der Stromverteilungsvorrichtung schematisch darstellen.
Gemäß FIG 3 ist es die Aufgabe der ersten trainierten Funktion 4, in einem gegebenen digitalen Foto, welches als eine Bilddatei 2 vorliegt, zu erkennen, welche Anzahl an Sicherungsleisten 10 in der Stromverteilungsvorrichtung verbaut sind, in welchem Schaltzustand sie sich befinden und mit welchen Schaltmitteln sie den Schaltzustand erreichen. In FIG 3 beispielsweise erkennt die erste trainierten Funktion 4, dass in der Stromverteilungsvorrichtung fünf Sicherungsleisten 10 verbaut sind, bei denen die Abgänge a1 und a2 und a4 mit ersten Sicherungseinsätzen bestückt sind, der Abgang a3 mit Kontakteinsätzen bestückt ist, der Abgang a4 mit zweiten Sicherungseinsätzen bestückt ist, und der Abgang a5 unbestückt, also gesperrt, ist. Dabei überführt die erste trainierte Funktion 4 das in der Bilddatei 2 enthaltene digitale Foto in eine Tabelle D(a,p), wobei die Abgänge bzw. Sicherungsleisten als Spalten a = 1 bis 5 und die Phasen als Zeilen p = 1 bis 3 wiedergegeben werden:

Tabelle D(a,p)

|    | a1  | a2  | a3  | a4  | a5 |
|----|-----|-----|-----|-----|----|
| p1 | SE1 | SE1 | KE1 | SE2 | 0  |
| p2 | SE1 | SE1 | KE1 | SE2 | 0  |
| p3 | SE1 | SE1 | KE1 | SE2 | 0  |

Die Tabellenwerte sind

SE1     = Sicherungseinsatz 1, z.B. 60 A
SE2     = Sicherungseinsatz 2, z.B. 250 A
KE1     = Kontakteinsatz 1 und
0        = unbestückt

Die erste trainierte Funktion 4 wird durch ein computerimplementiertes Verfahren zum Bereitstellen einer trainierten Funktion zur Mustererkennung, im Folgenden auch als: Trainingssystem bezeichnet, erzeugt. Dieses Trainingssystem nutzt Trainingsdaten, welche den Zusammenhang zwischen digitalen Fotos mit den dazu passenden Tabellen D (a, p) der Stromverteilungsvorrichtungen beschreiben. Entsprechende Verfahren zur Bildanalyse, Bilderkennung und Mustererkennung, welche auf Maschinellem Lernen basieren, sind heute bereits im Einsatz.

Das computerimplementierte Verfahren zum Bereitstellen einer ersten trainierten Funktion zur Mustererkennung umfasst folgende Schritte: Zunächst werden Trainings-Eingabedaten bereitgestellt, umfassend mindestens eine Bilddatei, in der ein mit einer Digitalkamera aufgenommenes Bild einer Verteilerstation gespeichert ist, wobei auf dem Foto einzelnen Phasen p der Abgänge a zugeordnete Schaltelemente, deren Schaltzustand optisch erfassbar sind, abgebildet sind. Außerdem werden Trainings-Ausgabedaten bereitgestellt, die zu den Trainings-Eingabedaten in Beziehung stehen und Informationen zum Schaltzustand der Schaltelemente beinhalten; die Trainings-Ausgabedaten stellen die Ausgabedaten dar, welche die erste trainierte Funktion im Falle einer fehlerfreien Mustererkennung ausgibt, sind also sozusagen die Musterlösung. Basierend auf den Trainings-Eingabedaten und den Trainings-Ausgabedaten wird nun eine Funktion zur Mustererkennung trainiert, solange bis die Erkennungsgenauigkeit eine definierte Schwelle erreicht. Der Algorithmus der trainierten Funktion lernt also eine Funktion aus gegebenen Paaren von Ein- und Ausgaben. Dabei stellt während des Lernens ein "Lehrer", in der Regel ein Bediener, den korrekten Funktionswert, d.h. die Trainings-Ausgabedaten, zu einer Eingabe, d.h. zu den Trainings-Eingabedaten, bereit. Ziel des Trainings ist, dass der trainierten Funktion nach mehreren Rechengängen mit unterschiedlichen Ein- und Ausgaben die Fähigkeit antrainiert wird, Assoziationen herzustellen. Falls die trainierte Funktion eine vorgegebene Genauigkeits- oder Leistungsschwelle erreicht, wird die trainierte Funktion zur Mustererkennung einem realen System bereitgestellt.

Die erste trainierte Funktion 4 wird dabei so trainiert, dass sie aus einem digitalen Foto die folgenden Eigenschaften einer Stromverteilungsvorrichtung bestimmen kann:

• Anzahl der Abgänge a
• Anzahl der Phasen p
• Schaltzustand der Phase p des Abgangs a, bspw. offen/geschlossen
• Betriebsmittel der Phase p des Abgangs a, bspw. 60A-Sicherungseinsatz, Kontakteinsatz.

Nach Abschluss des Trainings übergibt das Trainingssystem die erste trainierte Funktion an ein zentrales IT-System, d.h. eine Datenverarbeitungsvorrichtung, in dem die Bestimmung der Schaltzustände für die realen Niederspannungsnetze erfolgt.

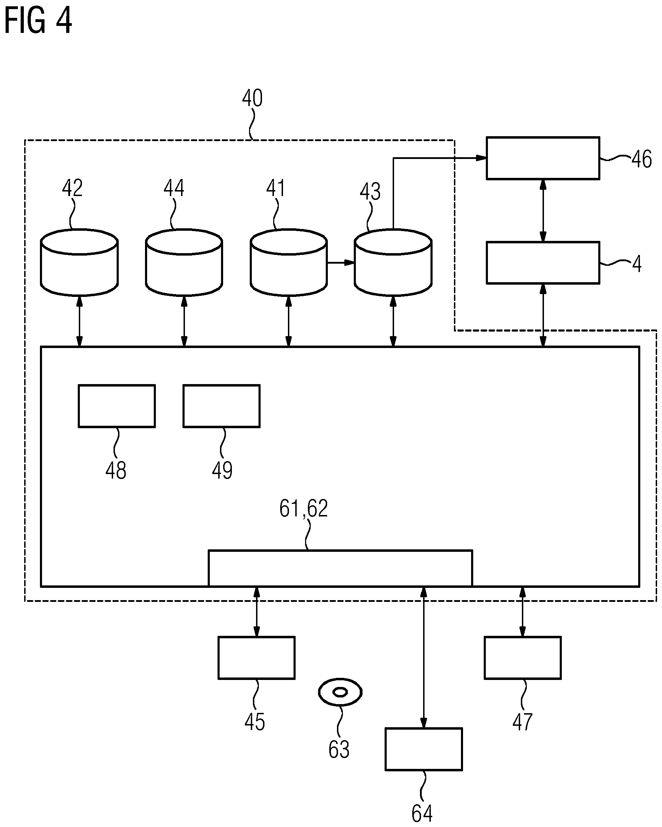

FIG 4 zeigt eine Datenverarbeitungsvorrichtung 40 gemäß einem Ausführungsbeispiel der vorliegenden Erfindung, im Folgenden auch als zentrales IT-System bezeichnet.

Die Datenverarbeitungsvorrichtung umfasst ein erstes Interface 61, konfiguriert zum Empfangen einer Bilddatei, und ein zweites Interface 62, konfiguriert zum Bereitstellen der Schaltzustandsdaten. Die Interfaces 61, 62 der Datenverarbeitungsvorrichtung 40 umfassen eine Benutzerschnittstelle oder eine Schnittstelle für Applikationen auf mobilen Rechnern 45, mit deren Hilfe das technische Personal, das sich vor Ort bei einer Stromverteilungsvorrichtung befindet, auf die Datenverarbeitungsvorrichtung 40 zugreifen und sie bedienen kann.

Über die Interfaces 61, 62 kann ein Bediener, der an einem IT-Arbeitsplatz 64 arbeitet, z.B. mithilfe eines PC die Datenverarbeitungsvorrichtung 40 verwalten und die Ergebnisse der Datenverarbeitung der Datenverarbeitungsvorrichtung 40 betrachten.

Die Datenverarbeitungsvorrichtung 40 umfasst einen Prozessor 48, d.h. eine Recheneinheit, konfiguriert zum Anwenden der ersten trainierten Funktion zur Mustererkennung auf die Bilddatei, wodurch die Funktionsausgabedaten erzeugt werden, welche Informationen zum Schaltzustand der Schaltelemente beinhalten. Der Prozessor 48 dient zum Ausführen eines Computerprogramms, wobei bei der Ausführung des Computerprogramms das erfindungsgemäße Verfahren ausgeführt wird. Die Datenverarbeitungsvorrichtung 40 umfasst außerdem einen Arbeitsspeicher 49, in den das in einem Computerlesbaren Speichermedium 63, z.B. einem Datenspeicher der Datenverarbeitungsvorrichtung 40, z.B. ein ROM, oder einem mobilen Datenspeicher, z.B. einer CD-ROM, einer DVD oder einem USB-Stick, gespeicherte Computerprogramm geladen werden kann, gegebenenfalls via eines der Interfaces 61, 62 (USB = Universal Serial Bus).

Die Datenverarbeitungsvorrichtung 40 umfasst eine Datenbank 41 mit den digitalen Fotos der realen Stromverteilungsvorrichtungen, welche z.B. in Ortsnetzstationen und Kabelverteilerschränken angeordnet sind.

Die Datenverarbeitungsvorrichtung 40 umfasst eine Datenbank 42 mit den statischen Daten der Stromverteilungsvorrichtungen, in der die folgenden Datensätze gespeichert werden:

- Bezeichnung der Stromverteilungsvorrichtung
- Geographische Position des Stromverteilungsvorrichtung
- Anzahl der Abgänge a (Sicherungsleisten)
- Bezeichnung der jeweiligen Abgänge a.

Die Datenverarbeitungsvorrichtung 40 umfasst eine Datenbank 43 mit den abstrahierten Datenmodellen, in der die folgenden Datensätze gespeichert werden:

- Bezeichnung der Stromverteilungsvorrichtung
- Graphik des abstrahierten Datenmodells, z.B. als Vektorgraphik
- A(a): Bezeichnung der Abgänge a (Sicherungsleisten)
- P(p): Bezeichnung der Phasen p.

Die Datenverarbeitungsvorrichtung 40 umfasst eine Datenbank 44 mit den dynamischen Daten der Stromverteilungsvorrichtungen, in der die folgenden Datensätze gespeichert werden:

- Bezeichnung der Stromverteilungsvorrichtung
- S(a,p): Schaltzustand der Phase p des Abgangs a
- B(a,p): Betriebsmittel der Phase p des Abgangs a.

Alternativ können die Informationen, die in den vier Datenbanken 41 bis 44 gespeichert werden, auch in ein bis drei Datenbanken oder in mehr als vier Datenbanken abgespeichert werden.

Die erste trainierte Funktion 4 kann in die Datenverarbeitungsvorrichtung 40 geladen werden, wobei die erste trainierte Funktion 4 zur Mustererkennung aktiviert wird, sobald die Funktion 4 mittels des Trainingssystems 46 ausreichend trainiert ist, um eine definierte Genauigkeit sicherstellen zu können.

Über eine Schnittstelle hat die Datenverarbeitungsvorrichtung 40 Verbindung zu weiteren IT-Netzen 47 wie z.B. dem Internet oder einem offenen, cloudbasierten IoT-Betriebssystem für das Internet der Dinge wie der Mindsphere (IoT = Internet of Things). Die Verbindung kann über Kabelleitungen oder mithilfe von Kommunikationsnetzwerken wie LANs (= Local Area Network) und WANs (= Wide Area Network), z.B. das Internet, erfolgen.

Mit dem mobilen Rechner 45 und dem zentralen IT-System 40 werden die folgenden Arbeitsschritte durchlaufen, um die Schaltzustände des Niederspannungsnetzes digital abzubilden:
In einem ersten Schritt nimmt das technische Personal mit Hilfe der Kamerafunktion des mobilen Rechners 45 ein digitales Foto der Stromverteilungsvorrichtung, die sich z.B. in einer Ortsnetzstation oder in einem Kabelverteilerschrank befindet, auf.

In einem zweiten Schritt gibt das technische Personal in den mobilen Rechner 45 eine Bezeichnung der Stromverteilungsvorrichtung ein, d.h. um welche Stromverteilungsvorrichtung, insbesondere welche Ortsnetzstation oder welchen Kabelverteilerschrank, es sich handelt. Dazu kann entweder ein der Stromverteilungsvorrichtung zugeordnetes Kennzeichen, wie z.B. ein Bar- oder QR-Code aufgenommen oder eine Beschriftung eingelesen oder manuell eingegeben werden. Alternativ kann vorgesehen sein, dass eine Identifikation einer Stromverteilungsvorrichtung mittels der geographischen Position erfolgt, die mittels einer Positionsbestimmung, z.B. basierend auf GPS, bestimmt wird (GPS = Global Positioning System). Dazu kann eine Positionsbestimmungs-Funktion des mobilen Rechners 45 verwendet werden.

Anschließend werden das digitale Foto in Form einer Bilddatei sowie die Bezeichnung bzw. die geographische Position der Stromverteilungsvorrichtung an das zentrale IT-System 40 gesendet.

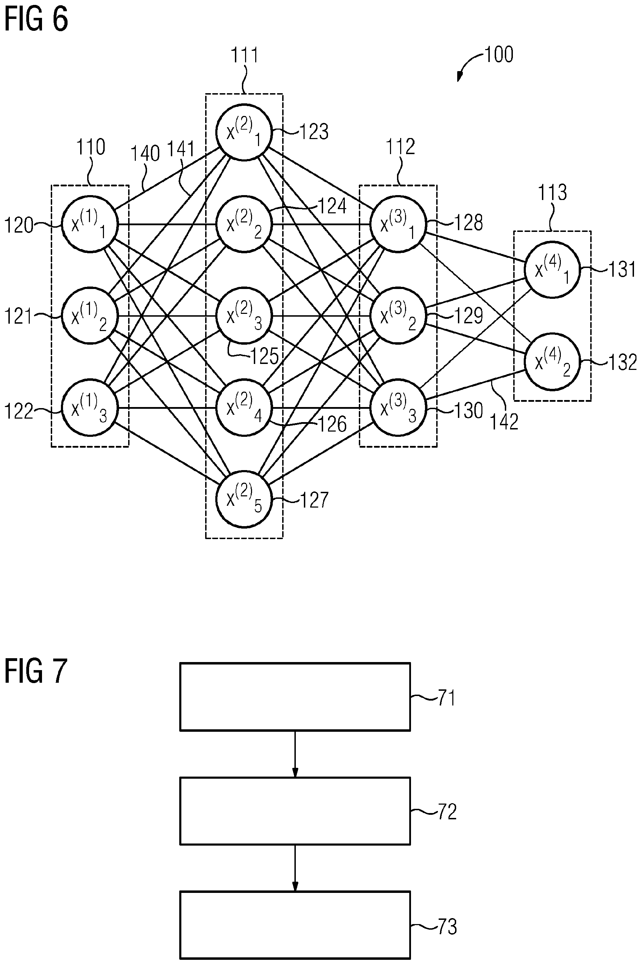

Der Prozessor 48 des zentralen IT-Systems 40 veranlasst, getriggert durch die Befehle des erfindungsgemäßen Computerprogrammprodukts, dass die Bilddatei in der Datenbank 41 zum Speichern der Bilddateien gespeichert wird. Dies ist als Schritt 71 in FIG 7 dargestellt.

Der Prozessor 48 des zentralen IT-Systems 40 veranlasst, getriggert durch die Befehle des erfindungsgemäßen Computerprogrammprodukts, das mit Hilfe der ersten trainierten Funktion 4 zunächst die Tabelle D (a, p) erzeugt wird. Dies ist als Schritt 72 in FIG 7 dargestellt. Danach prüft das zentrale IT-System 40, ob für diese Stromverteilungsvorrichtung bereits Daten in den verschiedenen Datenbanken vorliegen. Falls dies nicht der Fall ist, werden in der Datenbank 42 der statischen Daten und in der Datenbank 43 der abstrahierten Datenmodelle die entsprechenden Datenelemente angelegt. Anschließend werden die Vektoren S(a,p) und B(a,p) in die Datenbank 44 für die dynamischen Daten eingetragen.

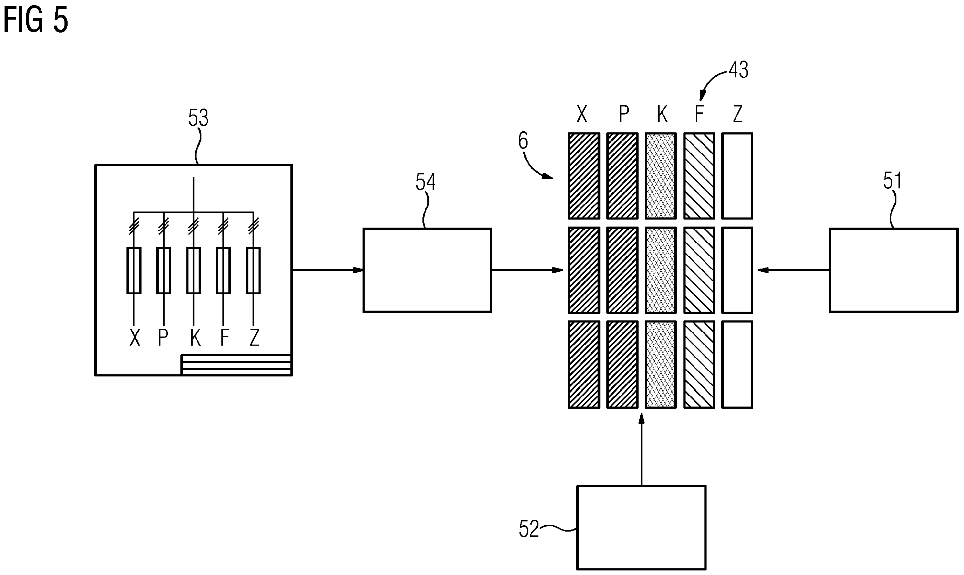

In einem weiteren Schritt müssen bei diesen neuen Datenelementen noch die weiteren Eigenschaften des abstrahierten Datenmodells 43 bestimmt werden, insbesondere die beiden Vektoren A(a) und P(p), d.h. die Bezeichnungen A der Abgänge a und die Bezeichnungen P Phasen p. FIG 5 zeigt dazu drei mögliche Optionen, wie dies erfolgen kann:

i) Manueller Eintrag: Der Anwender wird in einer Bedienoberfläche einer Dateneingabe-App 51 zu einer Eingabemaske geführt, in die er die Bezeichnungen der Abgänge A(a) und der Phasen P(p) manuell einträgt. Die so eingegebenen Daten werden dann zu der Datenbank 43 mit den abstrahierten Datenmodellen übertragen.

ii) Import aus anderen IT-Systemen: Die Bezeichnungen der Abgänge A(a) und der Phasen P(p) werden über eine Datenschnittstelle 52 aus einem anderen IT-System in die Datenbank 43 mit den abstrahierten Datenmodellen importiert, zum Beispiel aus einem GIS-System oder einem Asset Management System (GIS = Geographisches Informations-System).

iii) Schrifterkennung aus einer technischen Zeichnung / einem Schaltplan: Im Allgemeinen befinden sich bei den Stromverteilungsvorrichtungen, z.B. in den ONS oder KVS, technische Zeichnungen und/oder Schaltpläne 53 in Papierform, aus denen die Bezeichnungen der Abgänge A(a) und der Phasen P(p) mit Hilfe einer Funktion zur optischen Zeichenerkennung (engl.: Optical Character Recognition = OCR) ausgelesen werden. Es ist möglich, dass die Identifizierungsdaten bzw. Kennzeichnungsdaten, aus denen die Bezeichnungen der Abgänge A(a) und der Phasen P(p) hervorgehen, mit Hilfe einer zweiten trainierten Funktion 54 zur Mustererkennung aus den technischen Dokumentationen gewonnen werden. Dabei erkennt die zweite trainierte Funktion 54 die in einem Schaltplan 53 den einzelnen Abgängen a zugeordneten Bezeichnungen X, P, K, F, Z und ordnet die Bezeichnungen den entsprechenden Abgängen a des abstrahierten Datenmodell 6 zu. Alternativ kann die Erkennung der Bezeichnungen der Abgänge A(a) und der Phasen P(p) auch aus dem digitalen Foto der Stromverteilungsvorrichtung mit Hilfe der Mustererkennung bzw. der optischen Zeichenerkennung gewonnen werden, falls die einzelnen Abgänge A(a) und Phasen P(p) der Sicherungsleisten bzw. Lastschaltleisten mit diesen Bezeichnungen beschriftet sind.

Falls die betreffende Stromverteilungsvorrichtung in der Datenbank 43 der abstrahierten Datenmodelle bekannt ist, wird zunächst geprüft, ob das abstrahierte Bildmodell 6, das aus dem neu übertragenen digitalen Foto 2 erzeugt wurde, strukturidentisch mit dem bereits abgespeicherten abstrahierten Bildmodell ist. Falls dies der Fall ist, werden die von der ersten trainierten Funktion 4 bestimmten Vektoren S(a,p) und B(a,p) in die Datenbank 44 der dynamischen Daten eingetragen. Falls dies nicht der Fall ist, werden die Daten nicht eingetragen und der Anwender auf die Inkonsistenz aufmerksam gemacht.

Abschließend veranlasst der Prozessor 48 des zentralen IT-Systems 40, getriggert durch die Befehle des erfindungsgemä-βen Computerprogrammprodukts, dass das digitale Foto 2 ebenfalls in der entsprechenden Datenbank 41 abgespeichert und der Prozess beendet wird. Dies ist als Schritt 73 in FIG 7 dargestellt. Über die Schnittstellen des zentralen IT-Systems 40 können die Daten dann an andere Systeme 47, z.B. GIS-Systeme, weitergegeben werden.

Es ist möglich, dass die oben beschriebenen Arbeitsschritte des zentralen IT-Systems 40 ganz oder teilweise auch in einer Applikation auf dem mobilen Gerät 45 erfolgen. Dies ist insbesondere bei solchen Stromverteilungsvorrichtungen vorteilhaft, an deren Installationsort keine Mobilfunk- oder Internetverbindung besteht. Die Applikation synchronisiert die Daten dann zu einem späteren Zeitpunkt, wenn die Kommunikation mit dem zentralen IT-System 40 wieder möglich ist.

Das zentrale IT-System 40 kann in zwei Ausprägungen vorliegen. In einer ersten Ausprägung ist das Trainingssystem 46 für die erste trainierte Funktion 4 zur Mustererkennung Bestandteil des zentralen IT-Systems 40. Der Betreiber dieses System kann entweder der Netzbetreiber oder ein Serviceanbieter sein, der einen Software-as-a-Service anbietet. Gemäß einer zweiten Ausprägung ist das Trainingssystem 46 nicht Bestandteil des zentralen IT-Systems 40, sondern Teil eines vom zentralen IT-System 40 getrennten Systems. In diesem Fall betreibt der Netzbetreiber das zentrale IT-System 40 und ein Serviceanbieter das Trainingssystem 46, welcher trainierte Funktionen 4 zur Mustererkennung als Software-as-a-Service anbietet.

In der zweiten Ausprägung kann weiterhin vorgesehen sein, dass das zentrale IT-System 40 des Netzbetreibers die digitalen Fotos 2 und dazu passende Datenmodelle der Stromverteilungsvor-richtungen an das Trainingssystem 46 sendet, um dort die Bereitstellung von Trainingsdaten für das Maschinenlernverfahren der ersten trainierten Funktion 4 zu unterstützen. Gegebenenfalls werden diese Daten in anonymisierter Form, z.B. ohne exif-Daten, zur Verfügung gestellt.

FIG 6 zeigt eine Ausgestaltung eines künstlichen neuronalen Netzwerks 100, wie es in der ersten trainierten Funktion 4 zum Einsatz kommt. Alternative Bezeichnungen für "künstliches neuronales Netzwerk" sind "Neuronales Netzwerk", "Künstliches Neuronales Netz" oder "Neuronales Netz".

Das künstliche neuronale Netz 100 weist Knoten (engl.: nodes) 120, ..., 132 und Kanten (engl.: edges) 140, 141, 142 auf, wobei jede Kante 140, 141, 142 eine gerichtete Verbindung eines ersten Knoten 120, ..., 132 mit einem zweiten Knoten 120, ..., 132 ist. Während im Allgemeinen der erste Knoten 120, ..., 132 und der zweite Knoten 120, ..., 132 unterschiedliche Knoten 120, ..., 132 sind, ist es auch möglich, dass der erste Knoten 120, ..., 132 und der zweite Knoten 120, ..., 132 identisch sind. Zum Beispiel ist in FIG 6 die Kante 140 eine gerichtete Verbindung von dem Knoten 120 zu dem Knoten 123, und die Kante 142 ist eine gerichtete Verbindung von dem Knoten 130 zu dem Knoten 132. Eine Kante 140, 141, 142 von einem ersten Knoten 120, ..., 132 zu einem zweiten Knoten 120, ..., 132 wird auch als "eingehende Kante" (engl.: ingoing edge; incoming edge) bezüglich des zweiten Knotens 120, ..., 132 und als "ausgehende Kante" (engl.: outgoing edge) bezüglich des ersten Knotens 120, ..., 132 bezeichnet: "eingehende Kanten" eines Knotens sind gerichtete Kanten, deren Zielpunkt der Knoten ist, "ausgehende Kanten" eines Knotens sind gerichtete Kanten, deren Ursprung der Knoten ist.

In dieser Ausgestaltung sind die Knoten 120, ..., 132 des künstlichen neuronalen Netzwerks 100 in Schichten 110, ..., 113 angeordnet, wobei die Schichten eine intrinsische Ordnung aufweisen können, die durch die Kanten 140, 141, 142 zwischen den Knoten 120, ..., 132 eingeführt wird. Insbesondere können die Kanten 140, 141, 142 nur zwischen benachbarten Schichten von Knoten existieren. Im gezeigten Ausführungsbeispiel gibt es eine Eingabeschicht 110, die nur die Knoten 120, 121, 122 ohne eine eingehende Kante aufweist, eine Ausgabeschicht 113, die nur die Knoten 131, 132 ohne eine ausgehende Kante aufweist, und versteckte Schichten 111, 112 zwischen der Eingabeschicht 110 und der Ausgabeschicht 113. Im Allgemeinen kann die Anzahl der versteckte Schichten 111, 112 willkürlich gewählt werden. Die Anzahl an Knoten 120, 121, 122 in der Eingabeschicht 110 steht üblicherweise in Beziehung zu der Anzahl an Eingabewerten des Neuronalen Netzes, und die Anzahl an Knoten 131, 132 in der Ausgabeschicht 113 steht üblicherweise in Beziehung zu der Anzahl an Ausgabewerten des neuronalen Netzes.

Insbesondere kann jedem Knoten 120, ..., 132 des neuronalen Netzwerks 100 eine (reelle) Zahl als Wert zugewiesen werden. Hier bedeutet $x^{(n)}_i$ den Wert des i-ten Knoten 120, ..., 132 der n-ten Schicht 110, ..., 113. Die Werte der Knoten 120, 121, 122 der Eingabeschicht 110 sind äquivalent zu den Eingabewerten des neuronalen Netzwerks 100, die Werte der Knoten 131, und 132 der Ausgabeschicht 113 sind äquivalent zu den Ausgabewerten des neuronalen Netzwerks 100. Außerdem kann jede Kante 140, 141, 142 eine reelle Zahl als Gewicht aufweisen, insbesondere eine reelle Zahl in dem Intervall [-1, 1] oder dem Intervall [0, 1]. Hier bezeichnet $w^{(m,n)}_{i,j}$ das Gewicht der Kante zwischen dem i-ten Knoten 120, ..., 132 der m-ten Schicht 110, ..., 113 und dem j-ten Knoten 120, ..., 132 der n-ten Schicht 110, ..., 113. Darüber hinaus ist die Abkürzung $w^{(n)}_{i,j}$ definiert als $w^{(n,n+1)}_{i,j}$.

Insbesondere werden, um die Ausgabewerte des neuronalen Netzwerks zu berechnen, die Eingabewerte durch das neuronale Netzwerk propagiert. Insbesondere können die Werte der Knoten 120, ..., 132 der (n+1)-ten Schicht 110, ..., 113 aus Basis der Werte der Knoten 120, ..., 132 der n-th Schicht 110, ..., 113 berechnet werden wie folgt:

$$x^{(n+1)}_j = f\left( \Sigma_i \; x^{(n)}_i \cdot w^{(n)}_{i,j} \right).$$

Hierbei ist die Funktion f eine Transferfunktion (auch bezeichnet als "Aktivierungsfunktion"). Bekannte Transferfunktionen sind Stufenfunktionen, Sigmoidfunktionen (z.B. die Logistische Funktion, die generalisierte Logistische Funktion, der Hyperbeltangens, die Arkustangens-Funktion, die Fehlerfunktion, die Smoothstep-Funktion) oder Rectifier-Funktionen. Die Transferfunktion wird hauptsächlich zu Normalisierungszwecken verwendet.

Insbesondere werden die Werte schichtweise durch das neuronale Netzwerk propagiert, wobei Werte der Eingabeschicht 110 durch die Eingabe in das Neuronale Netzwerks 100 gegeben sind, Werte der ersten versteckten Schicht 111 auf Basis der Werte der Eingabeschicht 110 des Neuronalen Netzwerks 100 berechnet werden können, Werte der zweiten versteckten Schicht 112 auf Basis der Werte der ersten versteckten Schicht 111 berechnet werden können, etc.

Um die Gewichte $w^{(m,n)}_{i,j}$ für die Kanten festzusetzen, muss das Neuronale Netzwerk 100 unter Verwendung von Trainingsdaten trainiert werden. Insbesondere weisen Trainingsdaten Trainings-Eingabedaten und Trainings-Ausgabedaten auf (bezeichnet mit $t_i$). Für einen Trainingsschritt wird das Neuronale Netzwerk 100 auf die Trainings-Eingabedaten angewendet, um berechnete Ausgabedaten zu erzeugen. Insbesondere weisen die Trainingsdaten und die berechnete Ausgabedaten eine Anzahl von Werten auf, die gleich der Anzahl der Knoten der Ausgabeschicht ist.

Insbesondere wird ein Vergleich zwischen den berechnete Ausgabedaten und den Trainingsdaten benutzt, um die Gewichte in dem Neuronale Netzwerk 100 rekursiv anzupassen (Backpropagationsalgorithmus). Insbesondere werden die Gewichte geändert gemäß

$$W'^{(n)}{}_{i,j} = W^{(n)}{}_{i,j} - \gamma \cdot \delta^{(n)}{}_j \cdot x^{(n)}{}_I,$$

wobei $\gamma$ die Lernrate ist, und die Zahlen $\delta^{(n)}{}_j$ rekursiv berechnet werden können wie folgt:

$$\delta^{(n)}{}_j = (\Sigma_k \delta^{(n+1)}{}_k \cdot W^{(n+1)}{}_{j,k}) \cdot f'(\Sigma_i x^{(n)}{}_i \cdot W^{(n)}{}_{i,j})$$

basierend auf $\delta^{(n+1)}{}_j$, falls die (n+1)-te Schicht nicht die Ausgabeschicht ist, und

$$\delta^{(n)}{}_j = (x^{(n+1)}{}_k - t^{(n+1)}{}_j) \cdot f'(\Sigma_i x^{(n)}{}_i \cdot W^{(n)}{}_{i,j})$$

falls die (n+1)-te Schicht die Ausgabeschicht 113 ist, wobei f' die erste Ableitung der Aktivierungsfunktion und $t^{(n+1)}{}_j$ der Vergleichs-Trainingswert für den j-ten Knoten der Ausgabeschicht 113 ist.

**Patentansprüche**

1. Computerimplementiertes Verfahren zum Bereitstellen von Schaltzustandsdaten, welche einen Schaltzustand einer Stromverteilungsvorrichtung (8) mit Abgängen (a, a1, a2, a3) für ein Niederspannungsnetz beschreiben, umfassend die Schritte:

   - Empfangen, durch ein erstes, zum Empfangen einer Bilddatei konfiguriertes Interface (61) einer Datenverarbeitungsvorrichtung, einer Bilddatei (2), in der ein mit einer Digitalkamera aufgenommenes Foto der Stromverteilungsvorrichtung (8) gespeichert ist, wobei auf dem Foto einzelnen Phasen (p) der Abgänge (a) zugeordnete Schaltelemente (11), deren Schaltzustand optisch erfassbar sind, abgebildet sind;
   - Anwenden, mit einer Recheneinheit (48), einer ersten trainierten Funktion (4) zur Mustererkennung auf die Bilddatei (2), wodurch Funktionsausgabedaten (6) erzeugt werden, welche Informationen zum Schaltzustand der Schaltelemente (11) beinhalten; und
   - Bereitstellen, durch ein zweites, zum Bereitstellen von Schaltzustandsdaten konfiguriertes Interface (62) einer Datenverarbeitungsvorrichtung, der Schaltzustandsdaten, umfassend die Funktionsausgabedaten (6),
   wobei das Verfahren außerdem folgende Schritte aufweist:

   - Empfangen von Kennzeichnungsdaten, welche Kennzeichnungen (A) der Abgänge (a) und/oder Kennzeichnungen (P) der Phasen (p) in der Stromverteilungsvorrichtung umfassen;
   - Verknüpfen der Kennzeichnungsdaten mit den Funktionsausgabedaten;
   - Bereitstellen der Schaltzustandsdaten, umfassend die verknüpften Funktionsausgabedaten und Kennzeichnungsdaten,

   wobei die Kennzeichnungsdaten auf mindestens eine der folgenden Weisen gewonnen werden:

   - mit Hilfe einer zweiten trainierten Funktion zur Mustererkennung aus technischen Dokumentationen;
   - mit Hilfe einer IT-Schnittstelle zu einem anderen System, in dem die Kennzeichnungsdaten vorliegen;
   - mit Hilfe einer Bedienoberfläche, mit deren Hilfe ein Anwender die Kennzeichnungsdaten einträgt.

2. Verfahren nach Anspruch 1, wobei die Informationen zum Schaltzustand der Schaltelemente (11) Informationen zur Art (B) und/oder zur Schaltstellung (S) mindestens eines Schaltelements (11) umfassen.

3. Verfahren nach einem der vorhergehenden Ansprüche, wobei die Informationen zum Schaltzustand der Schaltelemente (11) Informationen zur Anzahl der Abgänge (a) und/oder zur Anzahl der Phasen (p) je Abgang (a) in der Stromverteilungsvorrichtung (8) umfassen.

4. Verfahren nach einem der vorhergehenden Ansprüche, wobei das Foto Sicherungsleisten (10) einer Stromverteilungsvorrichtung (8) abbildet.

5. Verfahren nach einem der vorhergehenden Ansprüche, umfassend folgende Schritte:

   - Empfangen von Identifizierungsdaten, welche eine Identifikation der Stromverteilungsvorrichtung (8) erlauben;
   - Verknüpfen der Identifizierungsdaten mit den Funktionsausgabedaten;
   - Bereitstellen der Schaltzustandsdaten, umfassend die verknüpften Funktionsausgabedaten und Identifizierungsdaten.

6. Verfahren nach Anspruch 5,
   wobei die Identifizierungsdaten auf mindestens eine der folgenden Weisen gewonnen werden:

   - mit Hilfe einer zweiten trainierten Funktion zur Mustererkennung aus technischen Dokumentationen;
   - mit Hilfe einer IT-Schnittstelle zu einem anderen System, in dem die Identifizierungsdaten vorliegen;
   - mit Hilfe einer Bedienoberfläche, mit deren Hilfe ein Anwender die Identifizierungsdaten einträgt.

7. Datenverarbeitungsvorrichtung zur Ausführung des Verfahrens nach Anspruch 1, umfassend

   - ein erstes Interface (61), konfiguriert zum Empfangen der Bilddatei und von Kennzeichnungsdaten;
   - ein zweites Interface (62), konfiguriert zum Bereitstellen der Schaltzustandsdaten, umfassend die verknüpften Funktionsausgabedaten und Kennzeichnungsdaten;
   - eine Recheneinheit (48), konfiguriert zum Anwenden der ersten trainierten Funktion zur Mustererkennung auf die Bilddatei (2), wodurch die Funktionsausgabedaten erzeugt werden, welche Informationen zum Schaltzustand der Schaltelemente (11) beinhalten, und zum Verknüpfen der Kennzeichnungsdaten mit den Funktionsausgabedaten.

8. Datenverarbeitungsvorrichtung nach Anspruch 7, umfassend:

   - eine Datenbank (41) zum Speichern der Bilddateien;
   - eine Datenbank (42) zum Speichern folgender Datensätze: Kennzeichnung der Stromverteilungsvorrichtung (8); Geographische Position der Stromverteilungsvorrichtung (8); Anzahl der Abgänge (a); Bezeichnung der jeweiligen Abgänge (a) .
   - eine Datenbank (43) zum Speichern abstrahierter Bildmodelle umfassend folgender Datensätze: Bezeichnung der Stromverteilungsvorrichtung (8); Grafik eines abstrahierten Bildmodells der Bilddatei; Bezeichnung A(a) des Abgangs an einer Position a; Bezeichnung der Phase P(p) an einer Position p.
   - eine Datenbank (44) zum Speichern dynamischer Daten umfassend: Bezeichnung der Stromverteilungsvorrichtung (8); Art B(a,p) des Schaltelements (11) der Phase p des Abgangs a; Schaltzustand S(a,p) des Schaltelements (11) der Phase p des Abgangs a.

9. Computerprogrammprodukt, umfassend Befehle, die bei der Ausführung des Programms durch einen Computer diesen veranlassen, das Verfahren nach einem der Ansprüche 1 bis 6 auszuführen.

10. Computerlesbares Speichermedium (63) mit einem Computerprogrammprodukt nach Anspruch 9.

11. Computerimplementiertes Verfahren gemäß Anspruch 1, in dem zusätzlich die erste Funktion (4) zur Mustererkennung trainiert und bereitgestellt wird.

## Claims

1. Computer-implemented method for providing switching state data that describe a switching state of a power distribution device (8) having feeders (a, a1, a2, a3) for a low-voltage grid, comprising the following steps:

   - using a first interface (61), configured to receive an image file, of a data processing device to receive an image file (2) storing a photograph of the power distribution device (8) as taken by a digital camera, wherein the photograph depicts switching elements (11) that are assigned to individual phases (p) of the feeders (a) and whose switching state is able to be visually detected;

- using a computing unit (48) to apply a first trained pattern recognition function (4) to the image file (2), thereby generating function output data (6) that contain information about the switching state of the switching elements (11); and

- using a second interface (62), configured to provide switching state data, of a data processing device to provide the switching state data, comprising the function output data (6),

wherein the method furthermore comprises the following steps:

- receiving identification data that comprise identifications (A) of the feeders (a) and/or identifications (P) of the phases (p) in the power distribution device;
- linking the identification data to the function output data;
- providing the switching state data, comprising the linked function output data and identification data, wherein the identification data are obtained in at least one of the following ways:

- with the aid of a second trained pattern recognition function for recognizing patterns from technical documents;
- with the aid of an IT interface to another system in which the identification data are present;
- with the aid of a user interface by way of which a user enters the identification data.

2. Method according to Claim 1, wherein the information about the switching state of the switching elements (11) comprises information about the type (B) and/or about the switch position (S) of at least one switching element (11).

3. Method according to either of the preceding claims, wherein the information about the switching state of the switching elements (11) comprises information about the number of feeders (a) and/or about the number of phases (p) per feeder (a) in the power distribution device (8).

4. Method according to one of the preceding claims, wherein the photograph depicts fuse blocks (10) of a power distribution device (8).

5. Method according to one of the preceding claims, comprising the following steps:

- receiving identity data that make it possible to identify the power distribution device (8);
- linking the identity data to the function output data;
- providing the switching state data, comprising the linked function output data and identity data.

6. Method according to Claim 5,
wherein the identity data are obtained in at least one of the following ways:

- with the aid of a second trained pattern recognition function for recognizing patterns from technical documents;
- with the aid of an IT interface to another system in which the identity data are present;
- with the aid of a user interface by way of which a user enters the identity data.

7. Data processing device for carrying out the method according to Claim 1, comprising

- a first interface (61), configured to receive the image file and identification data;
- a second interface (62), configured to provide the switching state data, comprising the linked function output data and identification data;
- a computing unit (48), configured to apply the first trained pattern recognition function to the image file (2), thereby generating the function output data that contain information about the switching state of the switching elements (11), and to link the identification data to the function output data.

8. Data processing device according to Claim 7, comprising:

- a database (41) for storing the image files;
- a database (42) for storing the following datasets: identification of the power distribution device (8); geographical position of the power distribution device (8); number of feeders (a); name of the respective feeders (a).

- a database (43) for storing abstract image models comprising the following datasets: name of the power distribution device (8); graphic of an abstract image model of the image file; name A(a) of the feeder at a position a; name of the phase P(p) at a position p.
- a database (44) for storing dynamic data comprising: name of the power distribution device (8); type B(a,p) of the switching element (11) of the phase p of the feeder a; switching state S(a,p) of the switching element (11) of the phase p of the feeder a.

9. Computer program product comprising instructions that, when the program is executed by a computer, cause the computer to carry out the method according to one of Claims 1 to 6.

10. Computer-readable storage medium (63) containing a computer program product according to Claim 9.

11. Computer-implemented method according to Claim 1, in which the first pattern recognition function (4) is additionally trained and provided.


**Revendications**

1. Procédé, mis en oeuvre par ordinateur, pour disposer de données d'état de commutation, qui décrivent un état de commutation d'une installation (8) de distribution du courant ayant des sorties (a, a1, a2, a3) pour un réseau en basse tension, comprenant les stades :

   - réception, par une première interface (61), configurée pour la réception d'un fichier image, d'une installation de traitement de données, d'un fichier (2) image, dans lequel une photographie prise par un appareil photographique numérique de l'installation (8) de distribution de courant est mise en mémoire, dans lequel, sur la photographie, sont représentées diverses phases (p) d'éléments (11) de commutation affectées aux sorties (a), dont l'état de commutation peut être détecté optiquement ;
   - application, par une unité (48) informatique, d'une première fonction (4) d'apprentissage de reconnaissance des formes au fichier (2) image, grâce à quoi on produit des données (6) d'édition de fonction, qui contiennent des informations sur l'état de commutation des éléments (11) de coupure ; et
   - mise à disposition, par une deuxième interface (62), configurée pour la mise à disposition de données d'état de commutation, d'une installation de traitement de données, des données d'état de commutation comprenant les données (6) d'édition de fonction,

   dans lequel le procédé comporte en outre les stades suivants :

   - réception de données de caractérisation, qui comprennent des caractérisations (A) des sorties (a) et/ou des caractérisations (P) des phases (p) de l'installation de répartition du courant ;
   - combinaison des données de caractérisation aux données d'édition de fonction ;
   - mise à disposition des données d'état de commutation, comprenant les données d'édition de fonction et les données de caractérisation combinées,

   dans lequel on obtient les données de caractérisation d'au moins l'une des façons suivantes :

   - à l'aide d'une deuxième fonction d'apprentissage pour la reconnaissance des formes à partir de documentations techniques ;
   - à l'aide d'une interface IT avec un autre système, dans lequel il y a les données de caractérisation ;
   - à l'aide d'une surface de service, à l'aide de laquelle un utilisateur entre les données de caractérisation.

2. Procédé suivant la revendication 1, dans lequel les informations sur l'état de commutation des éléments (11) de coupure comprennent des informations sur le type (B) et/ou sur la position (S) de commutation d'au moins un élément (11) de coupure.

3. Procédé suivant l'une des revendications précédentes, dans lequel les informations sur l'état de commutation des éléments (11) de coupure comprennent des informations sur le nombre des sorties (a) et/ou sur le nombre de phases (p) par sortie (a) dans l'installation (8) de répartition du courant.

4. Procédé suivant l'une des revendications précédentes, dans lequel la photographie représente des prestations (10) de sécurisation d'une installation (8) de répartition du courant.

5. Procédé suivant l'une des revendications précédentes, comprenant les stades suivants :

- réception de données d'identification, qui permettent une identification de l'installation (8) de répartition du courant ;
- combinaison des données d'identification aux données d'édition de fonction ;
- mise à disposition des données d'état de commutation comprenant les données d'édition de fonction et les données d'identification combinées.

6. Procédé suivant la revendication 5,
dans lequel on obtient les données d'identification sur la base d'au moins l'une des façons suivantes :

- à l'aide d'une deuxième fonction d'apprentissage pour la reconnaissance des formes à partir de documentations techniques ;
- à l'aide d'une interface IT avec un autre système, dans lequel il y a les données d'identification ;
- à l'aide d'une surface de service, à l'aide de laquelle un utilisateur entre les données d'identification.

7. Installation de traitement de données pour l'exécution du procédé suivant la revendication 1, comprenant

- une première interface (61), configurée pour la réception du fichier image et de données de caractérisation ;
- une deuxième interface (62), configurée pour disposer de données d'état de commutation, comprenant les données d'édition de fonction et les données de caractérisation combinées ;
- une unité (48) informatique configurée pour appliquer la première fonction d'apprentissage pour la reconnaissance des formes au fichier (2) image, grâce à quoi, on produit des données d'édition de fonction, qui contiennent des informations sur l'état de commutation des éléments (11) de coupure, et sur la combinaison des données de caractérisation aux données d'édition de fonction.

8. Installation de traitement de données suivant la revendication 7, comprenant :

- une base (41) de données pour mettre en mémoire des fichiers image ;
- une base (42) de données pour mettre en mémoire des ensembles de données suivants : caractérisation de l'installation (8) de répartition du courant ; position géographique de l'installation (8) de répartition du courant ; nombre des sorties (a) ; désignation des sorties (a) respectives ;
- une base (43) de données pour mettre en mémoire des modèles d'images abstraits comprenant des ensembles de données suivants : désignation de l'installation (8) de répartition du courant ; graphique d'un modèle d'image abstrait du fichier image ; désignation A(a) de la sortie en une position a ; désignation de la phase P(p) en une position p,
- une base (44) de données pour la mise en mémoire de données dynamiques comprenant : désignation de l'installation (8) de répartition du courant ; type B(a,p) de l'élément (11) de coupure de la phase p de la sortie a ; état de commutation S(a,p) de l'élément (11) de coupure de la phase p de la sortie a.

9. Produit de programme d'ordinateur, comprenant des instructions qui, lorsque le programme est exécuté par un ordinateur, font que celles-ci exécutent un procédé suivant l'une des revendications 1 à 6.

10. Support (63) de mémoire déchiffrable par ordinateur comprenant un produit de programme d'ordinateur suivant la revendication 9.

11. Procédé mis en oeuvre par ordinateur suivant la revendication 1, dans lequel on fait l'apprentissage en outre de la première fonction (4) de reconnaissance des formes et on la met à disposition.

# FIG 1

FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- State Recognition of Electric Control Cabinet Switches Based on CNNs. **MOU, XINGANG et al.** 2018 IEEE 3rd International Conference on Image, Vision and Computing (ICIVC). IEEE, 27. Juni 2018, 183-187

- Research on a Detection and Recognition Algorithm for High-Voltage Switch Cabinet Based on Deep Learning with an improved YOLOv2 Network. **FU, CHEN-ZHAO et al.** 2018 11th International Conference on Intelligent Computation Technology and Automation (ICICTA). IEEE, 22. September 2018, 346-350